# EUROPEAN PATENT APPLICATION

(11) **EP 1 895 737 A1**
(43) Date of publication of application: **05.03.2008**
(21) Application number: 06018267.2
(22) Date of filing: 31.08.2006
(51) Int. Cl.: H04L 29/06

(54) **Frame based encryption for adaptive and scaleable audiovisual media**

(71) Applicant: Nokia Siemens Networks GmbH & Co. KG, 81541 München (DE)
(72) Inventor: Kalleitner, Franz, 4880 St. Georgen im Attergau (AT)

(57) **Abstract**

Providing confidentially of transmission for adaptive and scalable audiovisual media transfer over an RTP session. Each frame of one SRTP packet belonging to a same video/audio scene is separately encrypted.

## Description

This invention describes a method and system to provide confidentially transmission for adaptive and scalable audiovisual media transfer.

### Background

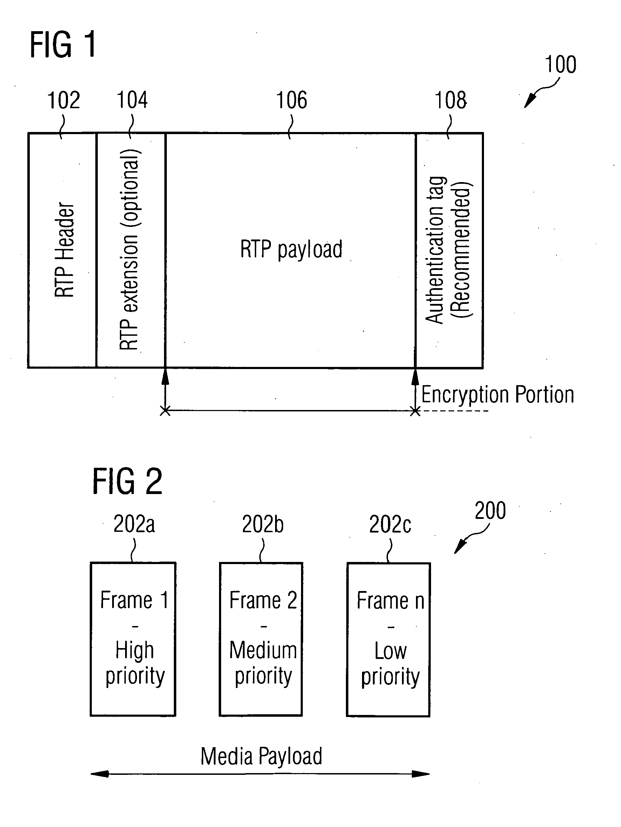

For example, SRTP provides a light weighted framework including several security features to protect the data transfer over an Real-Time Transport Protocol RTP session (Figure 1). Figure 1 shows a format of an Secure Real-Time Transport Protocol SRTP packet (simplified) 100 including an RTP header 102, optional extension 104, payload 106. An authentication tag 108 is shown at the end of the RTP packet (added for completeness). Short and zero-length message authentication may be used under certain condition, especially in case of wireless communication, in which bandwidth is a scarce and expensive resource.

Nowadays available encryption concepts do not consider adaptive or scalable media payload generated by media source encoders. Hence, the entire media payload is considered as "portion" to be encrypted.

Other methods i.e. IPSEC may protect the headers in addition to the media payload. However, a method to protect data transferred over a packet based transport network (i.e. IP) is working perfectly as long as no truncation of the media payload is intended. It has to be noted, if the content or format of an encrypted payload will be changed on the way from sender to receiver, it wouldn't be possible to decrypt the packet successfully. If this will happen, it must be assumed that the content of the packet has been changed i.e. by an eavesdropper, thus the packet will be discarded.

New developed media decoders are robust against packet loss or packet truncation. Both methods, may be worth for rate adaptation purposes to resolve local congestions, adapt the payload format depending on user preferences, etc. A representative video codec supporting such kind of find grained scalability is H.264/AVC with scalable extension and the well-known AMR, which represents an adaptive voice codec.

To explain the problem with a practical example, assume that it is desired to stream a movie to a receiver which will be encrypted for integrity. The stream (a concatenation of scenes) will be encoded, while the encoder generates packets of fixed or variable length. Packets to be transmitted, either carry a group of frames (scenes), each of different importance (i.e. a speaking person, background, and pop-up messages) or one frame (scene) structured with different importance (i.e. sharpness, resolution, spectrum).

To achieve rate adaptive confidential RTP streams, a frame-based encryption is proposed.

Figure 2 shows a Scaleable/adaptive media payload format 200. As shown, the payload is divided into one or several "frames" (1, 2, 3) 202a, b, c. More than one frame might be concatenated by the media encoder, which defines the boarders between the frames, too. The frames may carry encoded media with different priorities (high, medium and low, for example). In other words, frames, which have the highest relevance to the perceived quality at the receiver, are more important than others.

As a consequence, less important frames might be discarded i.e. for rate adaptation purposes, with less impact on the perceived quality.

Additional bytes may result in a significant decrease in spectrum efficiency. It shall be noted that strong authentication would impose nearly fifty percent overhead. If strong authentication is required, other authentication methods might be desired. For transmission over wireless links zero-length authentication is assumed.

No solution to the above problem has heretofore been proposed.

### Summary & Objects Of The Invention

1. A method for providing confidentially of transmission for adaptive and scalable audiovisual media transfer over an RTP session, the comprising the step of:
   encrypting each frame of one SRTP packet belonging to a same video/audio scene separately.
2. The method of claim 1, further comprising the step of decrypting the SRTP packet.
3. A SRTP packet produced in accordance with the method of claim 1.
4. An apparatus for providing confidentially of transmission for adaptive and scalable audiovisual media transfer over an RTP session, comprising:
   an encrypter that encrypts each frame of one SRTP packet belonging to a same video/audio scene separately.
5. The apparatus of claim 4 wherein the encrypter is a client/server application.
6. The apparatus of claim 4, wherein the encrypter is a scalable encryption layer.
7. An apparatus for providing confidentially of transmission for adaptive and scalable audiovisual media transfer over an RTP session, comprising:
   a decrypter that decrypts an SRTP packet that is encrypted with each frame of belonging to a same video/audio scene separately.

### Brief Description Of The Drawings

Fig. 1 shows an SRTP packet,
Fig. 2 shows an SRTP packet payload,
Fig. 3 shows the SRTP packet encrypted according to the present invention, and
Fig. 4 shows the SRTP packet when a frame is truncated.

### Detailed Description

It is proposed to encrypt each frame separately, so called "Sub-Encryption Portion". All Sub-Encryption portions, which belong to the same video scene or audio sample transferred in one RTP packet. However, the same encryption key might be used for all frames as long as the key is valid. It could be a client- or a server application function, device respectively.

Separately in this context means, in general, separate from other scenes. A separation from other frames would also be applicable depending on the type of media transmitted.

In one example, the invention may be in the form of a scalable en/decryption layer (handler) might help to depict the function in a better way.

The frames are delivered, either over one particular session or spread over a group of sessions. At any rate, the underlying network and/or scaling nodes need to be aware about scalable streams. A couple of methods may be used for marking such steams, i.e. port allocation, in/outband-signaling, pre-configuration, etc.

Two modes of scaling exists. That is discarding or truncating. To discard subframes is something that is already covered by this invention, but truncating of a packet is not. In my view, to simply truncate an encrypted packet is a non trivial task unless a scaling device will be involved in the security concept.

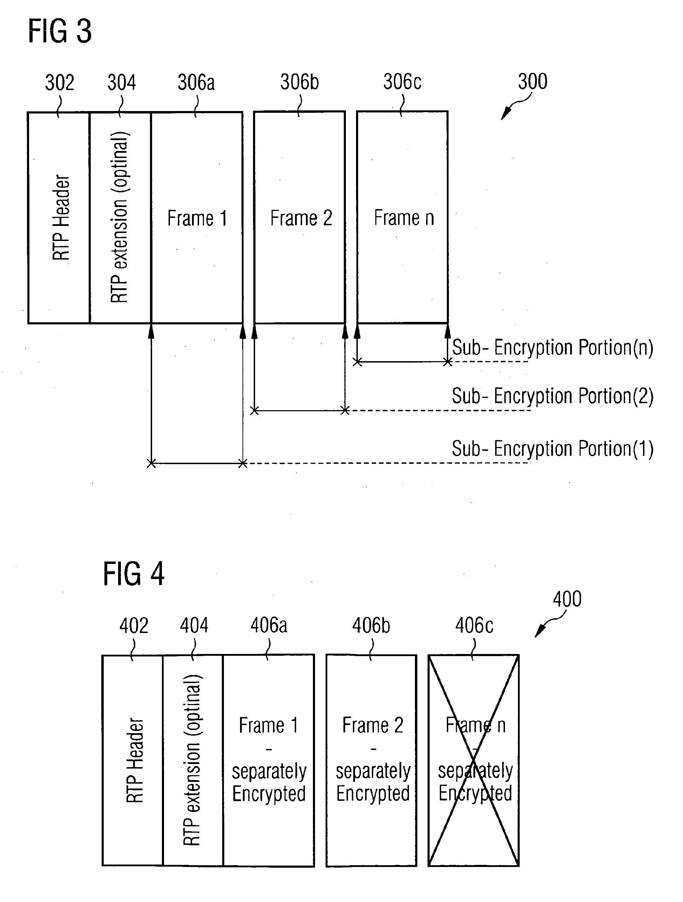

Figure 3 illustrates the proposed split of RTP payload into several encryption portions. Here is shown the SRTP packet 300 with RTP header 302 and extension 304. Now, the payload is encrypted for each frame separately as shown, 306 a, b and c..

Hence, with the present invention, confidential media payload transmission over RTP streams can be guaranteed for adaptive and scaleable audiovisual media.

For local rate adoption purposes the media payload can be chopped but decryption of media payload still works at the receiver, because each frames is encrypted separately.

Stream ciphers are able to seek to arbitrary locations in their key-stream, so that the encryption or decryption of one frame does not depend on preceding frames. Because of the introduction of such independency between encrypted frames it is possible that one or more less significant frame(s) can be chopped. The proposed method is applicable for unicast (unidirectional and bidirectional) and for multicast streams.

Figure 4 illustrates an encrypted media payload, where a less significant frame is truncated/dropped. Here again, the SRTP packet 400 includes RTP header 402, extension 404 and frames 406 a, b, and c. In this case, frame n 406c is truncated as illustrated. However, since the frames are encrypted separately no disruption of the other frames occurs owing to the truncation.

## Claims

1. A method for providing confidentially of transmission for adaptive and scalable audiovisual media transfer over an Real-Time Transport Protocol, RTP, session,
**characterized in that**:
separately encrypting each frame (306a-c) of one Secure Real-Time Transport Protocol, SRTP, packet (300) belonging to a same video/audio scene.

2. The method of claim 1, further comprising the step of decrypting the SRTP packet (300).

3. A SRTP (300) packet produced in accordance with the method of claim 1.

4. An apparatus for providing confidentially of transmission for adaptive and scalable audiovisual media transfer over an Real-Time Transport Protocol, RTP, session, comprising:
an encrypter that separately encrypts each frame (306a-c) of one SRTP packet (300) belonging to a same video/audio scene separately.

5. The apparatus of claim 4 wherein the encrypter is a client/server application.

6. The apparatus of claim 4, wherein the encrypter is a scalable encryption layer.

7. An apparatus for providing confidentially of transmission for adaptive and scalable audiovisual media transfer over an Real-Time Transport Protocol, RTP, session, **characterized in that**:
a decrypter that decrypts an Secure Real-Time Transport Protocol, SRTP, packet (300) that is encrypted with each frame (306a-c) of belonging to a same video/audio scene separately.
